# EUROPÄISCHE PATENTANMELDUNG

(11) **EP 0 896 039 A2**
(43) Veröffentlichungstag der Anmeldung: **10.02.1999**
(21) Anmeldenummer: 98114661.6
(22) Anmeldetag: 04.08.1998
(51) Int. Cl.: C09D 11/10

(54) **Wässrige Druckfarben auf Basis von Polymerdispersionen und ihre Verwendung**

(30) Priorität: 04.08.1997 DE 19733679
(71) Anmelder: BASF AKTIENGESELLSCHAFT, 67056 Ludwigshafen (DE)
(72) Erfinder: Schlarb, Bernhard, 67067 Ludwigshafen (DE); Wildburg, Gerald, 67071 Ludwigshafen (DE); Gyopar Rau, Maria, 67454 Hassloch (DE)
(74) Vertreter: Kinzebach, Werner, Dr.

(57) **Zusammenfassung**

Die vorliegende Erfindung betrifft wässrige Druckfarben, enthaltend:
a) 5,0 bis 95,0 Gew.-% eines Bindemittels, das
   a1) eine wässrige Polymerdispersion, die erhältlich ist durch radikalische Copolymerisation einer Mischung M, die mindestens ein ethylenisch ungesättigtes Monomer A umfasst, zu einem Polymerisat P mit einer Glasübergangstemperatur von -10 bis + 90 °C, in Gegenwart von Proteinen oder Proteinabbauprodukten als Schutzkolloid sowie gegebenenfalls weiterer Zusatzstoffe,
   a2) gegebenenfalls eine Base,
      sowie gegebenenfalls weitere Zusatzstoffe enthält;
b) 1,0 bis 40 Gew.-% eines Pigmentes;
c) 0 bis 20 Gew.-% eines Wachses;
d) gegebenenfalls ein vollständig wassermischbares, organisches Lösungsmittel
e) gegebenenfalls weitere Zusatzstoffe,
f) Wasser ad 100 Gew.-%
   sowie ihre Verwendung.

## Beschreibung

Die vorliegende Erfindung betrifft wässrige Druckfarben, die ein Bindemittel auf Basis einer Polymerdispersion enthalten sowie ihre Verwendung für den Flexo- und Tiefdruck.

Aufgrund der allgemeinen Bemühungen um Fortschritte im Bereich des Umweltschutzes und insbesondere infolge erhöhter Anforderungen an die Luftreinhaltung besteht gegenwärtig ein steigender Bedarf an wässrigen Druckfarben, die keine oder einen verringerten Anteil an organischen Lösungsmitteln enthalten. Wässrige Druckfarben werden z.Zt. vor allem zum Bedrucken von Papier und Pappe verwendet. Zunehmend besteht jedoch auch Bedarf an wässrigen Druckfarben, die zum Bedrucken nicht-saugfähiger Oberflächen, wie z. B. unpolarer Kunststoffsubstrate in Form von Polyolefin-, PVC- und Polyesterfolien sowie von Metallfolien, wie z. B. Aluminiumfolien, geeignet sind. Solche Substrate werden im allgemeinen durch Flexo- oder Tiefdruckverfahren bedruckt. Mit wässrigen Druckfarben bedruckte Folien haben den Vorteil, daß sie im allgemeinen toxikologisch unbedenklich sind und auch zur Verpackung von Lebensmitteln verwendet werden können. Das Bedrucken unpolarer Substrate, wie z. B. von durch eine Koronaentladung vorbehandeltem Polyethylen oder Polypropylen führt zu Problemen bei der Haftung der Druckfarben auf diesen Substraten, insbesondere nach längerer Lagerung des Druckes in Wasser (Naßhaftung).

Die EP-B-0 130 336 beschreibt wässrige Druckfarben mit guter Haftfestigkeit auf unpolaren Substraten auch bei Lagerung des Drucks in Wasser sowie mit guter Naßwischfestigkeit nach dem Trocknen der Farbe. Diese Farben enthalten ein Bindemittel auf Basis einer Polymerdispersion, die ethylenisch ungesättigte Aldehyde und Ketone als Comonomere umfasst, welche durch Zugabe wasserlöslicher, aliphatischer Dihydrazin-Verbindungen vernetzt werden. Diese Bindemittel sind zum einen im Hinblick auf die Produkteigenschaften der auf ihnen basierenden Druckfarben noch verbesserungsfähig, zum anderen ist ein Bindemittel auf Basis von Dihydrazin-Verbindungen im Hinblick auf eine Verwendung zum Bedrucken von Lebensmittelfolien toxikologisch nicht unbedenklich.

Die DE-A-33 23 810 beschreibt ein Verfahren zur Herstellung emulgatorfreier, wässriger Polymerdispersionen und deren Verwendung zur Herstellung redispergierbarer Kunststoffpulver sowie zur Herstellung von Klebstoffen und als Farb-, Textil- oder Papierhilfsmittel. Dabei werden als Schutzkolloide wasserlösliche Proteine und vorzugsweise basisch abgebaute Gelatinederivate verwendet, wobei der pH-Wert der Polymerisation so gewählt wird, daß der isoelektrische Punkt des Proteins weder berührt noch durchschritten wird.

Der vorliegenden Erfindung liegt die Aufgabe zugrunde, neue wässrige Druckfarben Zur Verfügung zu stellen, die auch für die Anwendung auf unpolaren Kunststoffsubstraten sowie auf Metallfolien geeignet sind. Insbesondere sollen diese Druckfarben eine gute Naßhaftung nach dem Trocknen, auch bei längerer Lagerung des Druckes in Wasser besitzen. Des weiteren soll das in den Druckfarben enthaltene Bindemittel eine gute Pigmentverträglichkeit, eine niedrige Viskosität auch bei einem nur geringen Anteil an wassermischbaren, organischen Lösungsmitteln, eine gute Viskositätsstabilität bei der Lagerung, Geruchsneutralität und eine gute Verdruckbarkeit zeigen. Des weiteren soll das Bindemittel bei einer Verwendung der Farben zum Bedrucken von Lebensmittelfolien toxikologisch unbedenklich sein.

Überraschenderweise wurde nun gefunden, daß die Aufgabe gelöst wird, wenn man in wässrigen Druckfarben ein Bindemittel auf Basis einer Polymerdispersion verwendet, die in Gegenwart eines Proteins oder Proteinabbauproduktes als Schutzkolloid erhältlich ist.

Gegenstand der Erfindung sind daher wässrige Druckfarben, enhaltend:
a) 5,0 bis 95,0 Gew.-% eines Bindemittels, das
   a1) eine wässrige Polymerdispersion, die erhältlich ist durch radikalische Copolymerisation einer Mischung M, die mindestens ein ethylenisch ungesättigtes Monomer A umfasst, zu einem Polymerisat P mit einer Glasübergangstemperatur von -10 bis + 90 °C, in Gegenwart von Proteinen oder Proteinabbauprodukten als Schutzkolloid sowie gegebenenfalls weiterer Zusatzstoffe,
   a2) gegebenenfalls eine Base,
      sowie gegebenenfalls weitere Zusatzstoffe enthält;
b) 1,0 bis 40 Gew.-% eines Pigmentes;
c) 0 bis 20 Gew.-% eines Wachses;
d) gegebenenfalls ein vollständig wassermischbares, organisches Lösungsmittel
e) gegebenenfalls weitere Zusatzstoffe,
f) Wasser ad 100 Gew.-%.

### Komponente a):

### a1):

Die zur Herstellung der Polymerisate P verwendete Monomerenmischung M enthält 50 bis 100 Gew.-%, bevorzugt 60 bis 99,9 Gew.-%, insbesondere bevorzugt 80 bis 99 Gew.-% mindestens eines radikalisch polymerisierbaren, ethylenisch ungesättigten Monomers A (Hauptmonomer) und 0 bis 50 Gew.-%, bevorzugt 0,1 bis 40 Gew.-%, insbesondere bevorzugt 1 bis 20 Gew.-% mindestens eines Comonomers B.

Geeignete Monomere A sind Ester α,β-monoethylenisch ungesättigter C₃-C₆-Mono- und -Dicarbonsäuren mit Alkanolen mit bevorzugt 1 bis 12 Kohlenstoffatomen, besonders bevorzugt 1 bis 8 Kohlenstoffatomen und insbesondere 1 bis 4 Kohlenstoffatomen, wie z. B. Ester der Acrylsäure und/oder Methacrylsäure mit Methanol, Ethanol, n-Propanol, Isopropanol, n-Butanol, Isobutanol und 2-Ethylhexanol, Ester von Vinylalkohol und Monocarbonsäuren mit 1 bis 20 Kohlenstoffatomen, wie z. B. Vinylformiat, Vinylacetat, Vinylpropionat, Vinyl-n-butyrat, Vinyllaurat, Vinylstearat, und Vinylester stark verzweigter, gesättigter Monocarbonsäuren mit C₉-, C₁₀- und C₁₁-Seitenketten (Versatic-Säuren), Vinylaromaten, wie z. B. Styrol, α-Methylstyrol, p-Methylstyrol, α-n-Butylstyrol, p-n-Butylstyrol, p-n-Decylstyrol, o-Chlorstyrol oder Vinyltoluol, Vinyl- und Vinylidenhalogenide, wie z. B. Vinylchlorid und Vinylidenchlorid, α,β-ethylenisch ungesättigte Nitrile, wie z. B. Acrylnitril und Methacrylnitril, C₂-C₆-Monoolefine, wie z. B. Ethylen und Propylen sowie nichtaromatische Kohlenwasserstoffe mit 2 bis 8 Kohlenstoffatomen und mindestens 2 olefinischen Doppelbindungen, wie z. B. Butadien, Isopren und Chloropren sowie deren Mischungen.

Geeignete Comonomere B sind z. B. Acrylamid und Methacrylamid sowie deren N-alkylierte Derivate, α,β-monoethylenisch ungesättigte C₃-C₆-Mono- und -Dicarbonsäuren sowie deren Anhydride und Halbester, Vinylsulfonsäuren und ihre wasserlöslichen Salze und N-Vinylpyrrolidon.

Weiterhin geeignete Comonomere B sind vernetzende Monomere, die zusätzlich zu ihrer ethylenisch ungesättigten Doppelbindung eine Epoxy-, Hydroxy-, N-Methylol-, Carbonylfunktion oder zwei nichtkonjugierte, ethylenisch ungesättigte Doppelbindungen aufweisen. Dabei kann die Monomermischung M 0 bis 40 Gew.-%, bevorzugt 0 bis 20 Gew.-%, insbesondere bevorzugt 0,2 bis 15 Gew.-% dieser vernetzenden Monomere enthalten. Vorzugsweise erfolgt die Vernetzungsreaktion erst während der Trocknung des Polymerisates, wobei die Vernetzung durch Tempern und gegebenenfalls durch Zusatz von Katalysatoren, wie z. B. protonenabspaltenden Substanzen, wie Maleinsäure, Diammoniumhydrogenphosphat oder Ammoniumnitrat beschleunigt werden kann.

Beispiele für vernetzende Monomere B sind die Ester α,β-pungesättigter Carbonsäuren mit Diolen, wie z. B. Hydroxyalkylacrylate und Hydroxyalkylmethacrylate, N-hydroxyalkylierte Amide α,β-ungesättigter Carbonsäuren, z. B. N-hydroxyalkylierte Acrylamide und Methacrylamide, wie N-Methylolacrylamid und N-Methylolmethacrylamid sowie Monomere mit mindestens zwei Vinylresten, mindestens zwei Vinylidenresten oder mindestens zwei Alkenylresten. Dazu zählen z. B. Alkylenglykoldiacrylate, Alkylenglykoldimethacrylate, wie z. B. Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat oder Methylbisacrylamid.

Weitere vernetzend wirkende Monomere B sind die Acrylamidoglykolsäure und Methacrylamidoglykolsäure und deren Ether, Ester oder Etherester mit Alkoholen, wie Alkanolen, mit bis zu 12 C-Atomen, beispielsweise Acrylamidomethoxyessigsäure, Acrylamidohydroxyessigsäuremethylester, Acrylamidomethoxyessigsäuremethylester, Methacrylamidomethoxyessigsäure, Methacrylamidohydroxyessigsäuremethylester, Methacrylamidomethoxyessigsäuremethylester, die entsprechenden Butyl- und -butoxyderivate, Acrylamidobutoxyessigsäurebutylester und Methacrylamidobutoxyessigsäurebutylester.

Weitere vernetzend wirkende Monomere B sind olefinisch ungesättigte Ketone oder Aldehyde. Als copolymerisierbare olefinisch ungesättigte Ketone oder Aldehyde kommen Monomere mit mindestens einer Aldo- oder Ketogruppe und einer polymerisierbaren Doppelbindung in Frage. Von besonderem Interesse sind Acrolein, Methacrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxyalkylpropanale der allgemeinen Formel (I) 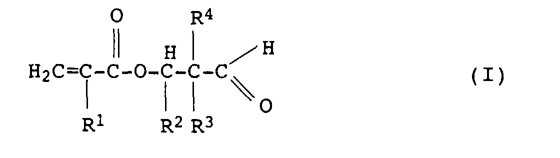 worin R¹ für Wasserstoff oder Methyl, R² für Wasserstoff oder C₁-C₃-Alkyl, R³ für C₁-C₃-Alkyl und R⁴ für C₁-C₄-Alkyl steht. Derartige (Meth)acryloxyalkylpropanale können nach dem in der DE-A-27 22 097 beschriebenen Verfahren durch Veresterung von β-Hydroxyalkylpropanalen der allgemeinen Formel (II) 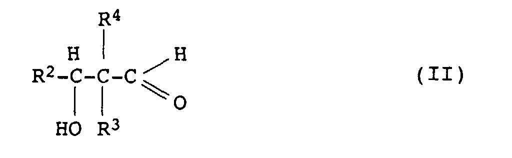 in der R², R³ und R⁴ die oben angegebenen Bedeutungen haben, mit Acryl- oder Methacrylsäure in Gegenwart von Verdünnungsmitteln sowie geringen Mengen Sulfonsäuren und Mineralsäuren hergestellt werden. Als Ketogruppen tragende Monomere kommen ferner Diacetonacrylat, Diacetonmethacrylat, Acetonylacrylat, 2-Hydroxypropylacrylatacetylacetat und Butandiol-1,4-acrylatacetylacetat in Frage. Die Menge der Aldo- bzw. Ketogruppen aufweisenden einpolymerisierten Comonomeren beträgt im allgemeinen etwa 0,5 bis 10 Gew.-%, vorzugsweise 1 bis 5 Gew.-%, bezogen auf die Monomermenge des Copolymerisats.

Nach einer bevorzugten Ausführungsform enthält die Mischung M radikalisch polymerisierbare, ethylenisch ungesättigte Monomere A, die ausgewählt sind unter den vier folgenden Klassen in den vorgenannten bevorzugten Mengenverhältnissen:
- Klasse I
   Ester der Acrylsäure und/oder Methacrylsäure mit Alkanolen mit 1 bis 12 Kohlenstoffatomen und/oder Styrol;
- Klasse II
   Styrol und/oder konjugierte Diene, bevorzugt 1,3-Butadien;
- Klasse III
   Vinylhalogenide und/oder Vinylidenhalogenide, bevorzugt Vinylchlorid und/oder Vinylidenchlorid;
- Klasse IV
   Vinylester und/oder aliphatische Kohlenwasserstoffe mit 1 oder 2 Doppelbindungen und 2 bis 8 Kohlenstoffatomen und/oder Ester der Acrylsäure und/oder der Methacrylsäure.

Besonders bevorzugt sind Mischungen M mit Monomeren der Klasse I.

Nach einer weiteren bevorzugten Ausführungsform enthält die Mischung M radikalisch polymerisierbare, ethylenisch ungesättigte Comonomere B, die ausgewählt sind unter den vier folgenden Klassen in den vorgenannten, bevorzugten Mengenverhältnissen:
- Klasse V
   Hydroxyalkylacrylate und/oder Hydroxyalkylmethacrylate;
- Klasse VI
   Acrylamid und/oder Methacrylamid sowie deren N-Alkylderivate;
- Klasse VII
   α,β-monoethylenisch ungesättigte Mono- und/oder Dicarbonsäuren sowie deren Anhydride und Halbester;
- Klasse VIII
   olefinisch ungesättigte Ketone oder Aldehyde

Besonders bevorzugt sind Mischungen M mit Comonomeren der Klasse V.

Gemäß einer insbesonders bevorzugten Ausführungsform enthält die Mischung M dann als ethylenisch ungesättigte Monomere A Methylacrylat, Ethylacrylat, n-Butylacrylat, 2-Ethylhexylacrylat, Methylmethacrylat oder deren Mischungen und als Comonomere B Acrylsäure, Methacrylsäure, Maleinsäure, Fumarsäure, Itaconsäure, Crotonsäure, Maleinsäureanhydrid, Halbester der Maleinsäure und/oder Fumarsäure mit C₁-C₁₀-Alkanolen und/oder deren Mischungen. Besonders bevorzugte Comonomere sind Acrylsäure, Methacrylsäure oder deren Mischungen.

Die Glasübergangstemperatur des Polymerisats P liegt bevorzugt im Bereich von -10 bis +90°C, insbesondere im Bereich von 0 bis 70 °C. Die Glasübergangstemperatur des Polymeren kann nach der Methode der Differentialthermoanalyse (DTA) oder differential scanning calorimetry (DSC, wie in ASTM 3418/82 beschrieben) bestimmt werden.

Als Schutzkolloid wird ein Protein oder Proteinabbauprodukt verwendet. Geeignete Ausgangsproteine werden z. B. aus tierischen oder pflanzlichen Quellen gewonnen. Dazu zählen z. B. tierische Proteine, wie Gelatine, Kasein oder Fischproteine, die z. B. aus Haaren, Hörnern, Hufen, Klauen, Nägeln, Knochen oder Milch durch übliche Verfahren gewonnen werden. Zu den pflanzlichen Proteinen zählen z. B. Proteine aus Reis, Weizen, Kartoffeln oder Ölsamen, die ebenfalls in üblicher Weise gewonnen werden. Zur Herstellung von Proteinabbauprodukten können diese Ausgangsproteine mit Hilfe von Säuren, Laugen oder Enzymen in Oligo- und Polypeptide mit einem geringeren Molekulargewicht als die Ausgangsproteine aufgespalten werden. Die Herstellung der erfindungsgemäß in den Bindemitteln a) enthaltenen Polymerisate P erfolgt vorzugsweise in Gegenwart von Gelatine oder Gelatineabbauprodukten als Schutzkolloid. Vorzugsweise werden dabei stark abgebaute Gelatinederivate, wie z. B. die Gelita®-Marken der Deutschen Gelatinefabriken, z. B. Gelita®-Sol D, verwendet. Die Mischung M zur Herstellung der Polymerdispersion a1) enthält die Gelatine oder das Gelatinederivat in einer Menge von 0,1 bis 50 Gew.-%, bevorzugt von 0,5 bis 40 Gew.-%, insbesondere bevorzugt von 0,5 bis 20 Gew.-%, bezogen auf das Gewicht der polymerisierten Monomere.

Die erfindungsgemäß zu verwendenden Schutzkolloide können sowohl als einzige Dispergiermittel als auch im Gemisch mit anderen grenzflächenaktiven Substanzen als Zusatzstoffen angewendet werden.

Geeignete weitere grenzflächenaktive Zusatzstoffe sind die üblicherweise bei der Emulsionspolymerisation als Dispergiermittel eingesetzten Schutzkolloide und Emulgatoren, wie sie z. B. in Houben-Weyl, Methoden der organischen Chemie, Band XIV/1, Makromolekulare Stoffe, Georg-Thieme-Verlag, Stuttgart, 1961, S. 411 bis 420 beschrieben sind. Geeignete zusätzliche Schutzkolloide sind z. B. Polyvinylalkohole und teilverseifte Polyvinylacetate, Polyacrylate, Polyvinylpyrrolidon, Cellulose und Cellulosederivate, wie z. B. Methylcellulose, Hydroxyethylcellulose, Carboxymethylcellulose, Stärke und Stärkederivate, wie z. B. Cyanalkyletherstärke, Hydroxyalkyletherstärke, Carboxymethylstärke etc. Als Emulgatoren sind sowohl anionische, kationische als auch nichtionische Emulgatoren geeignet.

Vorzugsweise werden als grenzflächenaktive Substanzen Emulgatoren eingesetzt, deren relative Molekulargewichte im Unterschied zu den Schutzkolloiden üblicherweise unter 3500 Dalton liegen.

Brauchbare nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: C₄-C₁₀), Ethoxylate langkettiger Alkohole (EO-Grad: 3 bis 50, Alkylrest: C₈-C₃₆) sowie Polyethylenoxid/Polypropylenoxid-Blockcopolymere. Bevorzugt werden Ethoxylate langkettiger Alkanole (Alkylrest C₁₀-C₂₂, mittlerer Ethoxylierungsgrad 10 bis 50) und darunter besonders bevorzugt solche mit einem linearen C₁₂-C₁₈-Alkylrest und einem mittleren Ethoxylierungsgrad von 10 bis 50 sowie ethoxylierte Monoalkylphenole. Geeignete anionische Emulgatoren sind beispielsweise Alkali- und Ammoniumsalze von Alkylsulfaten (Alkylrest: C₈-C₂₂), von Schwefelsäurehalbestern ethoxylierter Alkanole (EO-Grad: 2 bis 50, Alkylrest: C₁₂-C₁₈) und ethoxylierter Alkylphenole (EO-Grad: 3 bis 50, Alkylrest: C₄-C₉), von Alkylsulfonsäuren (Alkylrest: C₁₂-C₁₈) und von Alkylarylsulfonsäuren (Alkylrest: C₉-C₁₈). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208). Als anionische Emulgatoren sind ebenfalls Bis(phenylsulfonsäure)ether bzw. deren Alkali- oder Ammoniumsalze, die an einem oder beiden aromatischen Ringen eine C₄-C₂₄-Alkylgruppe tragen, geeignet. Diese Verbindungen sind allgemein bekannt, z. B. aus der US-A-4,269,749, und im Handel erhältlich, beispielsweise als Dowfax® 2A1 (Dow Chemical Company).

Geeignete kationische Emulgatoren sind vorzugsweise quartäre Ammoniumhalogenide, z. B. Trimethylcetylammoniumchlorid, Methyltrioctylammoniumchlorid, Benzyltriethylammoniumchlorid oder quartäre Verbindungen von N-C₆-C₂₀-Alkylpyridinen, -morpholinen oder -imidazolen, z. B. N-Laurylpyridiniumchlorid.

Wird einer der vorgenannten Emulgatoren verwendet, so ist dieser nach Maßgabe seiner Verträglichkeit mit dem jeweiligen Proteinderivat auszuwählen. Die Menge an Emulgator beträgt im allgemeinen etwa 0,01 bis 10 Gew.-%, bezogen auf die Menge an polymerisierten Monomeren.

Bevorzugt wird die Mischung M zur Herstellung der wässrigen Polymerisatdispersionen nach dem Verfahren der radikalischen wässrigen Emulsionspolymerisation in Anwesenheit der Proteine oder Proteinderivate in üblicher Weise polymerisiert. Die Emulsionspolymerisationstemperatur beträgt in der Regel 30 bis 95°C. Das Polymerisationsmedium kann sowohl nur aus Wasser, als auch aus Mischungen aus Wasser und wassermischbaren Flüssigkeiten, wie z. B. Methanol, bestehen. Vorzugsweise wird nur Wasser verwendet. Die Emulsionspolymerisation kann sowohl als Batchprozeß als auch in Form eines Zulaufverfahrens, einschließlich Stufen- und Gradientenfahrweise, durchgeführt werden. Bevorzugt ist das Zulaufverfahren, bei dem man einen Teil des Polymerisationsansatzes vorlegt, auf die Polymerisationstemperatur erhitzt, unter Bildung eines Saatlatex anpolymerisiert und anschliessend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. In anwendungstechnisch vorteilhafter Weise enthält die Vorlage und/oder der Monomerenzulauf geringe Mengen an Emulgatoren, um die Oberflächenspannung des Dispergiermediums zu reduzieren und so das Einrühren zu erleichtern.

Das Schutzkolloid kann bei der Emulsionspolymerisation vorgelegt werden, zum Teil vorgelegt und der Rest zudosiert oder ganz während der Emulsionspolymerisation zudosiert werden. Vorteilhafterweise enthält der Polymerisationsansatz bei einem erreichten Umsatz von 80 % der zu polymerisierenden Monomeren mindestens die Hälfte der gesamten Schutzkolloidmenge. Besonders bevorzugt wird die gesamte Schutzkolloidmenge bei der Polymerisation vorgelegt.

Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Ebenfalls als Initiatoren geeignete organische Peroxide sind in der EP-A-0 536 597 beschrieben. Die genannten Polymerisationsinitiatoren werden in üblichen Mengen eingesetzt, z. B. in Mengen von 0,01 bis 5, vorzugsweise 0,1 bis 2,0 Gew.-%, bezogen auf die zu polymerisierenden Monomere.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat.

In der Regel beträgt die Menge der eingesetzten radikalischen Initiatorsysteme, bezogen auf die Gesamtmenge der zu polymerisierenden Monomere 0,1 bis 2 Gew.-%. Besonders bevorzugt werden Ammonium- und/oder Alkalimetallperoxodisulfate für sich oder als Bestandteil kombinierter Systeme als Initiatoren eingesetzt. Besonders bevorzugt wird Natriumperoxodisulfat verwendet.

Das radikalische Initiatorsystem kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in bekannter Weise sowohl von der chemischen Natur des Initiatorsystems als auch von der Polymerisationstemperator ab. Vorzugsweise wird das Initiatorsystem nach Maßgabe des Verbrauchs der Polymerisationszone zugeführt.

Die radikalische wässrige Emulsionspolymerisation erfolgt in der Regel bei Normaldruck, sie kann aber auch unter erhöhtem oder reduziertem Druck erfolgen.

Gegebenenfalls kann die Monomermischung M in Gegenwart von üblichen Polymerisationsreglern, wie Mercaptanen, z. B. tert.-Dodecylmercaptan, polymerisiert werden. Diese werden dann in einer Menge von 0,01 bis 5 Gew.-%, bezogen auf die Gesamtmenge der Mischung M verwendet.

Den Polymerdispersionen können weiterhin übliche Zusatzstoffe in der Vorlage, einem der Zuläufe oder nach Abschluß der Polymerisation zugesetzt werden. So kann gewünschtenfalls der pH-Wert der Dispersion durch Säuren oder Basen, z. B. Alkalihydroxide, Alkalicarbonate, Alkaliphosphate, Alkaliacetate, Ammoniak, HCl etc. eingestellt werden. Weitere geeignete Zusatzstoffe sind Reduktions- und Bleichmittel, wie z. B. die Alkalimetallsalze der Hydroxymethansulfinsäure (z. B. Rongalit®C der BASF AG).

Stoffe, die den Polymerisatdispersionen üblicherweise nach Abschluß der Polymerisation in Mengen von etwa 0,1 bis 5 Gew.-%, bezogen auf die Menge an polymerisierten Monomeren zugegeben werden können, sind Verbindungen die Polymerisate mit freien Carboxylgruppen vernetzen können, wie basische Verbindungen mehrwertiger Metalle, wie Zinkoxid, Calciumoxid oder die entsprechenden Hydroxyde, Acetate oder Carbonate oder die entsprechenden gemischten Salze. Weiterhin sind Verbindungen geeignet, die gegebenenfalls vorhandene Hydroxygruppen vernetzen, wie di- und polyfunktionelle anorganische Säuren und Säurederivate, z. B. Phosphoroxichlorid, Alkalitrimetaphosphate, Alkalipolyphosphate oder Alkalitetraborat, di- und polyfunktionelle organische Säuren, z. B. Adipinsäure, Citronensäure, 1,2,3,4-Butantetracarbonsäure, all-cis-1,2,3,4- Cyclopentantetracarbonsäure, Derivate von di- und polyfunktionellen organischen Säuren, wie Anhydride oder gemischte Anhydride, z. B. Diacetyladipinsäure, Acetylcitronensäureanhydrid, Säurechloride, z. B. Cyanursäurechlorid, Imidazolide und Guanidinderivate, außerdem di- und polyfunktionelle Isocyanate, wie Hexamethylendiisocyanat, 2,4-Diisocyanattoluol, di- und polyfunktionelle Alkylierungsmittel, z. B. Epichlorhydrin, β,β'-Dichlorethylether, Diepoxide, verschiedene Aldehyde oder Aldehydderivate, wie Formaldehyd, Acetaldehyd, Acrolein, 2,5-Dimethoxytetrahydrofuran oder Glutardialdehyd. Ferner kommen Kondensationsprodukte auf der Basis Formaldehyd, Glyoxal, Melamin, Phenol und/oder Harnstoff in Betracht. Dabei sind Formaldehyd und die formaldehydhaltigen Vernetzersysteme aufgrund toxikologischer Bedenken weniger geeignet.

Die erfindungsgemäßen wässrigen Polymerisatdispersionen werden in der Regel mit Gesamtfeststoffgehalten von 15 bis 70 Gew.-%, bevorzugt 30 bis 60 Gew.-%, hergestellt.

### Komponente a2)

Der pH-Wert, der durch radikalische Emulsionspolymerisation in Gegenwart eines der zuvor genannten Schutzkolloide erhaltenen wässrigen Polymerdispersionen kann zur Formulierung der erfindungsgemäßen Bindemittel a) durch Zusatz einer Base eingestellt werden. Geeignete Basen sind z. B. Ammoniak, flüchtige organische Amine, vorzugsweise Mono-, Di- oder Triethanolamin oder ein Mono-, Di- oder Trialkylamin, wie Ethylamin, Dimethylamin, Trimethyl- oder Triethylamin, sowie cyclische Amine, wie Pyrrolidin, Piperidin, Piperazin oder Morpholin, oder deren Mischungen. Weitere geeignete Basen sind Alkalihydroxide, wie z. B. NaOH oder KOH. Bevorzugt wird Polymerdispersionen a1), die noch freie Säuregruppen enthalten, eine dieser Basen zur wenigstens teilweisen Neutralisation zugesetzt.

Die Bindemittel a) können noch weitere übliche Zusatzstoffe enthalten. Dazu zählen z. B. die weiter unten als Komponente c) beschriebenen Wachse und Wachsdispersionen, die sowohl als Bindemittelkomponente wie auch bei der Formulierung der wässrigen Druckfarben zugesetzt werden können.

Gegebenenfalls kann dem Bindemittel a) zusätzlich zu den in den Komponenten a1) bis a3) enthaltenen Wassermengen weiteres Wasser zugesetzt werden. Vorzugsweise wird das Bindemittelgemisch ohne Wasserzusatz gelagert und den wässrigen Druckfarben zugesetzt.

Die Viskosität des Bindemittels a), gemessen nach DIN 53 211 in einem Auslaufbecher mit einer 4 mm-Düse, entspricht im allgemeinen einer Auslaufzeit von etwa 10 bis 30 s.

Nach einer möglichen Verfahrensvariante erfolgt die Formulierung der vorgenannten Bindemittel a) nicht separat, sondern die zuvor beschriebenen Komponenten a1) und a2) werden in einem Schritt mit den Komponenten b), c), d), e) und/oder f) zu den erfindungsgemäßen wässrigen Druckfarben formuliert.

### Komponente b)

Die wässrigen Druckfarben enthalten etwa 1,0 bis 40 Gew.-% mindestens eines Pigments, insbesondere in Form einer wässrigen Pigmentpräparation oder in Form von für die Dispergierung in wässrigen Medien ausgerüsteten Pigmenten (Pigmentpasten). Geeignete Pigmente, die zur Herstellung der Druckfarben verwendet werden können, sind die üblichen für wässrige Tiefdruck- oder Flexodruckfarben brauchbaren Pigmente.

### Komponente c)

Zur Verbesserung der Scheuerfestigkeit eines mit der erfindungsgemäßen wässrigen Druckfarbe hergestellten Druckfilmes können der wässrigen Druckfarbe noch 0 bis 20 Gew.-% eines mit den übrigen Komponenten verträglichen Wachses zugesetzt werden. Geeignete Wachse sind dem Fachmann bekannt. Dazu zählen mikrokristalline Wachse, Polyethylenwachse etc., die den wässrigen Druckfarben gewünschtenfalls auch als wässrige Dispersion zugesetzt werden können. Geeignete wässrige Paraffin- oder Polyethylenwachsdispersionen sind z. B. die Basophob®-Wachse oder die Luwax®-Wachse der BASF AG. Wie zuvor erwähnt, können die beschriebenen Wachse auch als Komponente in den Bindemitteln a) enthalten sein.

### Komponente d)

Die erfindungsgemäßen Druckfarben können gegebenenfalls zur Viskositätseinstellung und zur Beschleunigung des Trocknungsprozesses ein mit Wasser mischbares Lösungsmittel enthalten. Vorzugsweise ist der Anteil an organischen Lösungsmitteln bei den erfindungsgemäßen Druckfarben gering und beträgt höchstens etwa 10 Gew.-%, bezogen auf das Gesamtgewicht des Bindemittels a). Geeignete wassermischbare organische Lösungsmittel sind z. B. C₁-C₄-Alkohole, wie Methanol, Ethanol, n-Propanol, Isopropanol und n-Butanol oder Ketone, wie Methylethylketon oder Aceton. Vorzugsweise wird Isopropanol verwendet.

### Komponente e)

Die erfindungsgemäßen Bindemittel können gegebenenfalls noch weitere Zusatzstoffe enthalten. Geeignete weitere Zusatzstoffe e) sind z. B. die bereits zuvor als Zusatzstoffe der Komponente a) genannten grenzflächenaktiven Substanzen, wobei bevorzugt nichtionische und/oder anionische Emulgatoren eingesetzt werden.

Weitere geeignete Zusatzstoffe e) sind Entschäumer, z. B. auf Basis von hydrophoben Silicium-Verbindungen, die in Kombination mit hauptsächlich aliphatischen Kohlenwasserstoffen eingesetzt werden können. Dazu zählen z. B. NOPCO® 8034-E und Agitan® 281 der Fa. Münzing DS Chemie GmbH, Heilbronn.

Gewünschtenfalls kann den erfindungsgemäßen wässrigen Druckfarben noch ein zusätzlicher Anteil Wasser zugesetzt werden.

Die Formulierungen der Druckfarben, insbesondere die Mischung mit Pigmentpräparationen oder das Anreiben mit anorganischen oder organischen Pigmenten kann mit den üblichen Misch- bzw. Anreibeaggregaten durchgeführt werden. Besonders vorteilhaft ist, wenn man Pigmente, die in einem besonderen Finish-Prozeß für die Dispergierung in wässrigen Medien ausgerüstet wurden oder wässrige Pigmentpräparationen verwendet. Die Trockenzeit der so erhaltenen Druckfarben beträgt bei einer Temperatur von etwa 60 °C im allgemeinen etwa 1 bis 4 min.

Die erfindungsgemäßen Druckfarben zeichnen sich durch gleichbleibende Qualität hinsichtlich der Lagerbeständigkeit, Glanzgebung, Haftfestigkeit, Verhalten auf der Druckmaschine und insbesondere Naß-Wisch-Festigkeit und Geruchsneutralität aus. Sie eignen sich bevorzugt für den Flexodruck und den wässrigen Tiefdruck zum Bedrucken von Papier und insbesondere von Substraten mit unpolaren Oberflächen, wie z. B. Kunststoff- und Metallfolien. Die Erfindung wird anhand der folgenden, nicht einschränkenden Beispiele näher erläutert.

### Beispiele

### a) Herstellung der Dispersionen

Zur Herstellung der erfindungsgemäßen Beispiele 1 bis 5 und der Vergleichsbeispiele 1 und 2 (ohne Zusatz eines Gelatinederivats) wird in einem Reaktionsgefäß mit Rührer und Rückflußkühler die Vorlage auf 85 °C erhitzt und mit 5 Gew.-% von Zulauf 1, 10 Gew.-% von Zulauf 2, 10 Gew.-% von Zulauf 3 und, wenn vorhanden, 20 Gew.-% von Zulauf 4 versetzt. Es wird 15 min bei 85°C anpolymerisiert und anschliessend mit der Dosierung der Restmengen der Zuläufe 1, 2, 3 und 4 (soweit vorhanden) begonnen. Die Zugabe erfolgt kontinuierlich über 3 Stunden (Zuläufe 1 und 2) bzw. 3,5 Stunden (Zuläufe 3 und 4). Danach wird 1 Stunde bei 85 °C nachpolymerisiert. Anschliessend wird der Ansatz durch Zugabe von 2,9 g t.-Butylhydroperoxid und 2 g Rongalit® C (Reduktionsmittel auf Basis von Hydroxymethansulfinsäure der BASF AG) über einen Zeitraum von 60 min chemisch desodoriert. Der Feststoffgehalt der resultierenden wässrigen Polymerdispersion wird nach DIN 53 189 bestimmt. Die Zusammensetzung des Inhalts der Vorlage sowie der Zuläufe ist in Tabelle 1, die Zusammensetzung der Dispersionen in Tabelle 2 angegeben.

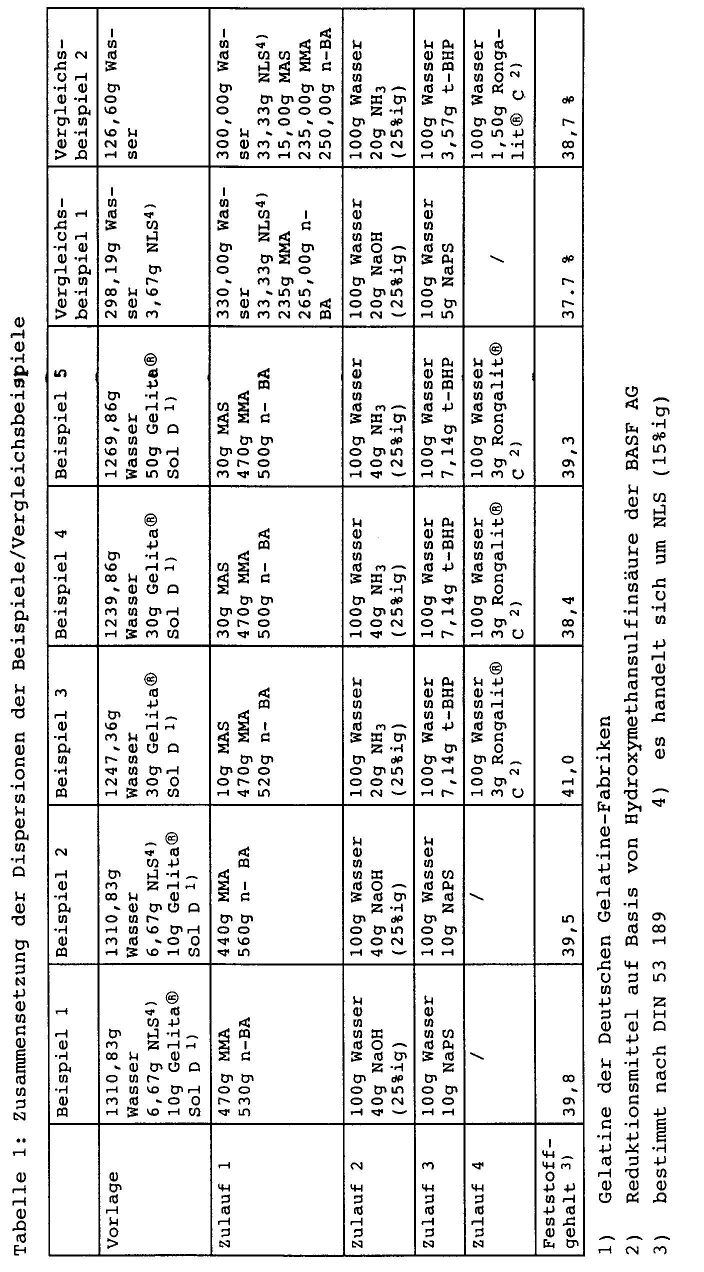

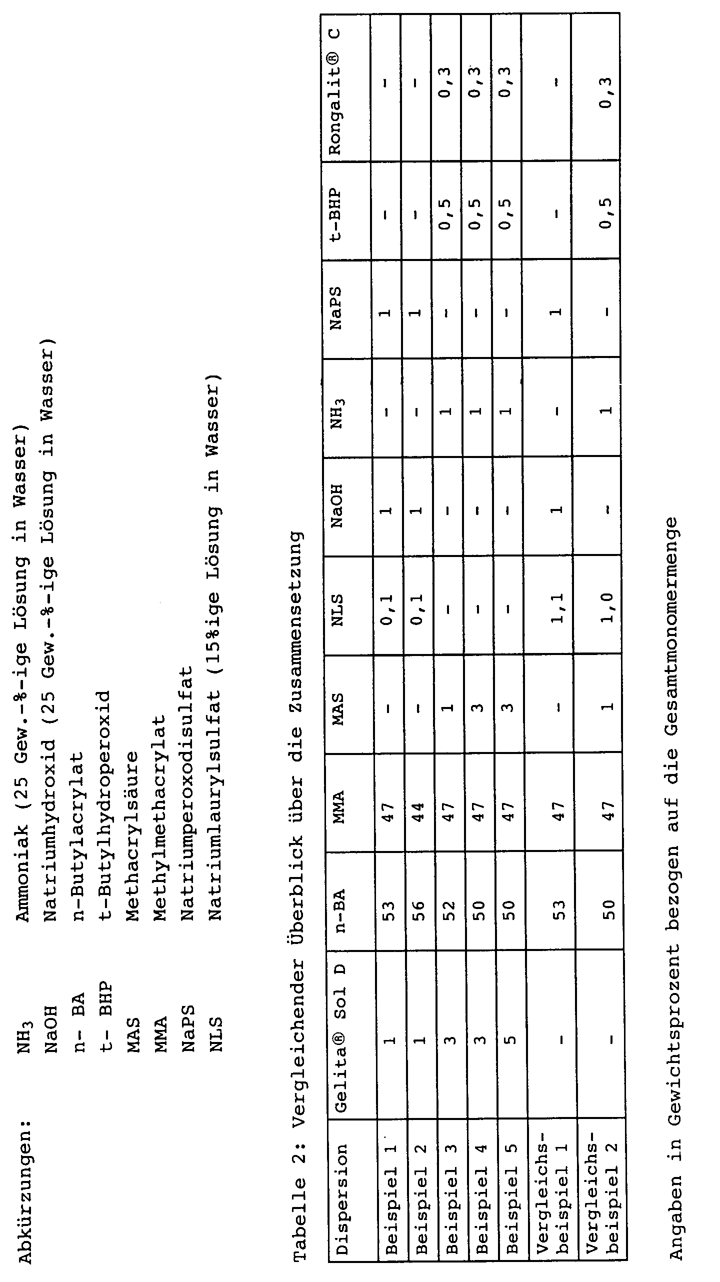

### b) Herstellung der Druckfarben

Zur Herstellung der Druckfarben werden die wässrigen Dispersionen mit den Zusatzstoffen nach Tabelle 3 durch 15-minütiges Rühren mit Hilfe eines Dissolvers (800 bis 1 000 Upm) formuliert.

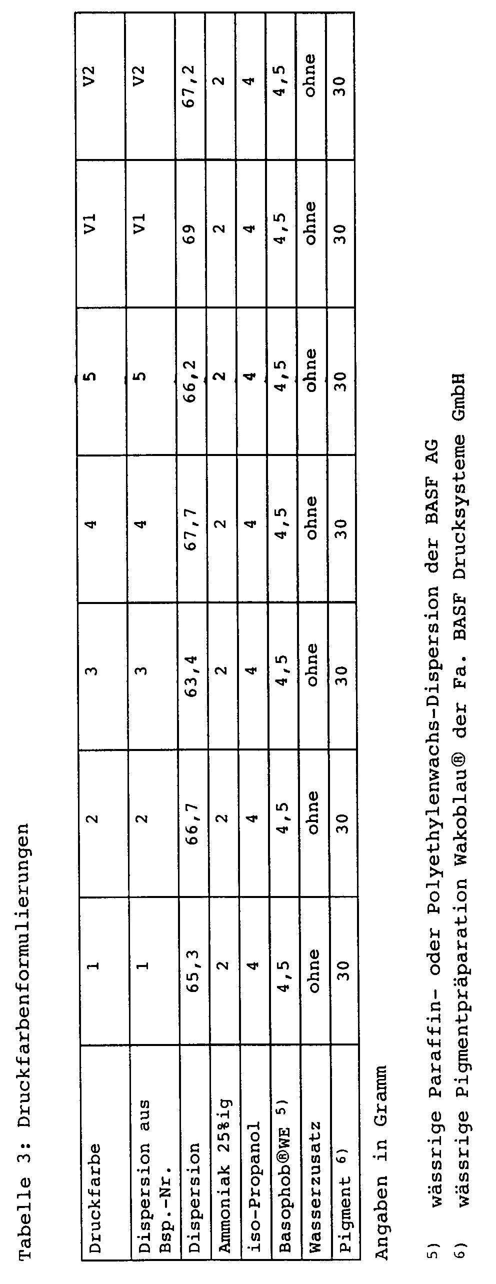

### c) Anwendungstechnische Eigenschaften

Die Druckfarben 1 bis 5 sowie V1 und V2 wurden mit einer 6 µm Rakel auf eine Corona-vorbehandelte Polyethylenfolie (LDPE-Weiß der Fa. Thermopack, Oberflächenspannung 40 mN/m) aufgebracht und in einem Trockenschrank 2 min bei 60°C getrocknet.

### - Haftfestigkeit (Tabelle 4)

Die Bestimmung der Haftfestigkeit wird nach der Tesa®-Abrißmethode in % beurteilt. Dabei wird ein Tesafilmstreifen von 20 bis 25 mm Breite (Tesafilm® 104-Beiersdorf AG) auf den zu prüfenden Druck geklebt, gleichmäßig angedrückt und ruckartig abgezogen. Die Prüfung erfolgt 1. nach der Trocknung, 2. nach der Wasserlagerung. Angegeben wird die abgelöste Fläche in % der Gesamtfläche.

### - Naßhaftung (Tabelle 4)

Zur Bestimmung der Naßhaftung wird die getrocknete Abrakelung in einen Eimer mit Wasser gelegt.

Durch leichtes Reiben der Lackierung 'im Wasser' mit dem Daumen wird beurteilt, ob sich die nasse Beschichtung vom Untergrund abreiben lässt oder nicht. Geprüft wird nach 30 min und 24 Stunden Wasserlagerung.

### Beurteilung:

- gut =: kein Abrieb
- mäßig =: deutlicher Abrieb
- schlecht =: der ganze Film abgerieben

### - Naßreibfestigkeit, Naßknitterfestigkeit (Tabelle 4)

Unter der Naßreib- bzw. -knitterfestigkeit versteht man die Widerstandsfähigkeit eines Druckes gegen eine starke mechanische Beanspruchung durch gleichzeitiges Reiben und Knittern in nassem Zustand.

Die Prüfung erfolgt im Anschluß an die Prüfung auf Naßhaftung und zwar so, daß die Abrakelung Lack gegen Lack 'unter Wasser' 20 mal kreisend gerieben wird.

### Beurteilung

Es wird visuell beurteilt, ob und wie stark der Druck beschädigt ist:
- 1 =: der Druck ist in Ordnung, keine Reib- oder Knitterspuren sichtbar
- 2 =: der Druck zeigt geringe Abriebspuren
- 3 =: der Druck ist an mehreren Stellen abgerieben
- 4 =: der Druck ist deutlich abgerieben
- 5 =: der Druck ist vollständig abgerieben

Der Druck gilt als naßreib- und knitterfest, wenn die Bewertungsstufe 1 und 2 erreicht wird.

### - Näßwischfestigkeit (Tabelle 4)

Unter Naßwischfestigkeit versteht man die Widerstandfähigkeit eines Druckes gegen leichte mechanische Beanspruchung durch Wischen. Der hochnasse Druck wird auf eine glatte, feste Unterlage gelegt. Unter leichtem Druck wird mit einem weichen (nicht parfümierten), feuchten Papiertuch 50 mal in der gleichen Richtung gewischt.

### Beurteilung

Es wird visuell beurteilt, ob und wie stark das Papier angefärbt bzw. der Druck vom Substrat abgewischt ist:
- 1 =: der Druck ist in Ordnung, Papier zeigt eine Spur Anfärbung
- 2 =: der Druck zeigt geringe Spuren, ebenso das Papier
- 3 =: der Druck zeigt Wischstellen, Papier ist etwas angefärbt
- 4 =: der Druck ist deutlich abgewischt, Papier deutlich angefärbt
- 5 =: die Druckfarbe ist völlig abgewischt, Papier stark angefärbt

### - Glanzgrad (Tabelle 4)

Die Glanzgrad wurde optisch beurteilt.

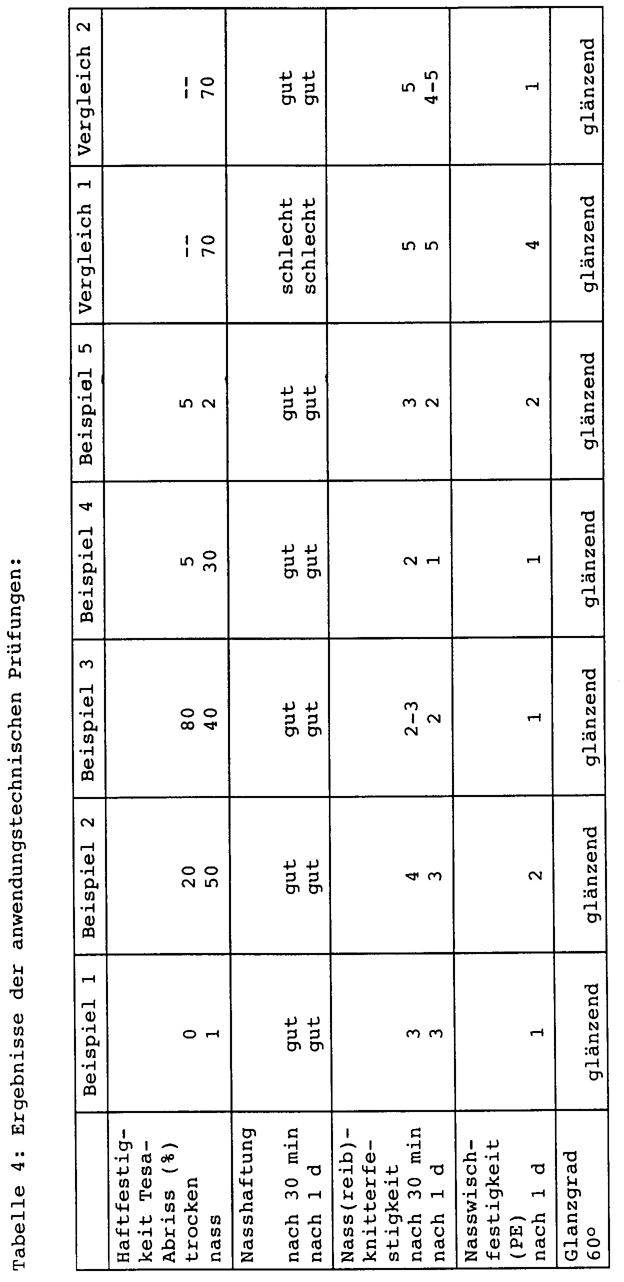

## Patentansprüche

1. Wässrige Druckfarben, enthaltend:
a) 5,0 bis 95,0 Gew.-% eines Bindemittels, das
a1) eine wässrige Polymerdispersion, die erhältlich ist durch radikalische Copolymerisation einer Mischung M, die mindestens ein ethylenisch ungesättigtes Monomer A umfasst, zu einem Polymerisat P mit einer Glasübergangstemperatur von -10 bis + 90 °C, in Gegenwart von Proteinen oder Proteinabbauprodukten als Schutzkolloid sowie gegebenenfalls weiterer Zusatzstoffe,
a2) gegebenenfalls eine Base,
sowie gegebenenfalls weitere Zusatzstoffe enthält;
b) 1,0 bis 40 Gew.-% eines Pigmentes;
c) 0 bis 20 Gew.-% eines Wachses;
d) gegebenenfalls ein vollständig wassermischbares, organisches Lösungsmittel
e) gegebenenfalls weitere Zusatzstoffe,
f) Wasser ad 100 Gew.-%.

2. Druckfarben nach Anspruch 1, wobei die Mischung M 50 bis 100 Gew.-%, bevorzugt 60 bis 99,9 Gew.-%, insbesondere bevorzugt 80 bis 99 Gew.-%, mindestens eines radikalisch polymerisierbaren, ethylenisch ungesättigten Monomers A und 0 bis 50 Gew.-%, bevorzugt 0,1 bis 40 Gew.-%, insbesondere bevorzugt 1 bis 20 Gew.-% mindestens eines Comonomers B enthält.

3. Druckfarben nach einem der Ansprüche 1 oder 2, wobei das Monomer A ausgewählt ist unter Estern α,β-ungesättigter C₃-C₆-Mono- und -Dicarbonsäuren, Estern von Vinylalkohol mit C₁-C₂₀-Monocarbonsäuren, Vinylaromaten, Vinylhalogeniden, Vinylidenhalogeniden, α,β-ethylenisch ungesättigten Nitrilen, C₂-C₆-Monoolefinen, nichtaromatischen Kohlenwasserstoffen mit mindestens zwei olefinischen Doppelbindungen und/oder deren Mischungen.

4. Druckfarben nach einem der Ansprüche 1 bis 3, wobei die Mischung M mindestens ein Comonomer B, ausgewählt unter Hydroxyalkylacrylaten und -methacrylaten, Acrylamid und Methacrylamid sowie deren N-Alkylderivate, α,β-monoethylenisch ungesättigten C₃-C₆-Mono- und -Dicarbonsäuren sowie deren Anhydride und Halbester, olefinisch ungesättigten Ketonen oder Aldehyden, und/oder deren Mischungen, enthält.

5. Druckfarben nach einem der Ansprüche 1 bis 4, wobei das Comonomer B ausgewählt ist unter Acrylsäure, Methacrylsäure und/oder deren Mischungen.

6. Druckfarben nach einem der Ansprüche 1 bis 5, wobei die Mischung M in Gegenwart von 0,1 bis 50 Gew.-%, bevorzugt 0,5 bis 40 Gew.-%, insbesondere bevorzugt 0,5 bis 20 Gew.-% des Proteins oder Proteinabbauproduktes, bezogen auf die Menge an polymerisierten Monomeren, polymerisiert wird.

7. Druckfarben nach Anspruch 6, wobei die Mischung M in Gegenwart von Gelatine oder einem Gelatinederivat als Schutzkolloid polymerisiert wird.

8. Druckfarben nach einem der Ansprüche 1 bis 7, wobei die Viskosität des Bindemittels a) gemessen nach DIN 53211 in einem Auslaufbecher mit einer 4 mm Düse einer Auslaufzeit von 10 bis 30 s entspricht.

9. Verwendung der Druckfarben nach einem der Ansprüche 1 bis 8 für den Flexodruck und den Tiefdruck.

10. Verwendung der Druckfarben nach einem der Ansprüche 1 bis 8 zum Bedrucken von Papier, Kunststoff- oder Metallfolien, insbesondere nach dem Flexodruck- oder Tiefdruckverfahren.
